# EUROPEAN PATENT SPECIFICATION

(11) **EP 3 029 634 B1**
(45) Date of publication and mention of the grant of the patent: **05.02.2020**
(21) Application number: 14195578.1
(22) Date of filing: 01.12.2014
(51) Int. Cl.: G06T 7/40

(54) **Echogenicity quantification method and calibration method for ultrasonic device using echogenicity index**
Echogenitätsquantifizierungsverfahren und Kalibrierungsverfahren für Ultraschallvorrichtung mittels Echogenitätsindex
Procédé de quantification d'échogénicité et procédé d'étalonnage de dispositif à ultrasons utilisant un indice d'échogénicité

(43) Date of publication of application: 08.06.2016
(73) Proprietor: AmCad BioMed Corporation, Taipei 105 (TW)
(72) Inventor: Chang, King -Jen, Taichung City (TW); Chen, Chiung -Nein, 10002 Taipei City (TW); Chen, Argon, 105 Taipei City (TW); Wang, Yu -Hsin, 105 Taipei City (TW); Huang, Kuo-Chen, 105 Taipei City (TW); Wu, Ming-Hsun, 10002 Taipei City (TW)
(74) Representative: dompatent von Kreisler Selting Werner - Partnerschaft von Patent- und Rechtsanwälten mbB

(56) References cited:
- US-A- 5 224 175
- US-A- 5 656 763
- US-B1- 8 705 811

## Description

### FIELD OF THE INVENTION

The invention relates to an echogenicity quantification method and calibration method using echogenicity index. In particular, the invention relates to an echogenicity quantification method and calibration method for grayscale ultrasonic device using echogenicity index.

### BACKGROUND OF THE INVENTION

Ultrasonic imaging is a common diagnostic imaging of the current clinical medicine. The echogenicity of grayscale ultrasound image which reflects the internal structure or constituent information of the tissue is one of the important clinical diagnostic indices. However, different imaging parameter setting, screen display, ambient lighting, or subjective consideration influences the interpretation of the echogenicity of grayscale ultrasound image so as to result in some errors on the interpretation and the variance of computer analysis, and to increase difficulties of the subsequent statistical analysis and clinical interpretation.

If the same lesion is imaged with different ultrasonic devices, the captured ultrasound images of the same lesion may have different echogenicity. For example, it tends to acquire inconsistent grayscale ultrasound images of the thyroid nodule due to the difference of the ultrasonic device or the parameter setting. The parameter settings which affect the echogenicity directly may include gain, depth, time gain compensation, and so on.

Different ultrasonic device may lead to different echogenicity of the same lesion. In addition, different physician having different subjective consideration or different condition of visual fatigue may have different interpretation of echogenicity even though the ultrasound image is captured by the same ultrasonic device and imaging parameter, and is displayed with the same screen and display setting. In order to improve the accuracy of aid diagnosis of the grayscale ultrasound images and relieve the working loads of the physicians, it is needed to develop an objective quantification method for assessing echogenicity of the Region Of Interest (ROI). Patent US 5,656,763 relates to the calibration of an ultrasound device, including the generation of a calibration curve, comprising the averaging of ultrasound signals in a user-defined region-of-interest and a reference region.

As a result, the inventor focused on the above object and finally developed the useful invention after detailed design and evaluation based on the development and design experience in the related field for years.

### SUMMARY OF THE INVENTION

The present invention provides an echogenicity quantification method and calibration method using echogenicity index. The echogenicity quantification method is to derive an echogenicity index for displaying on the clinical image to achieve the goal of objective quantification. In addition, the echogenicity index may be used to calibrate the echogenicity of different ultrasonic devices if being applied on the image calibration of the ultrasonic devices so as to provide similar echogenicity in different ultrasonic devices.

In an embodiment of the invention, the present invention provides an echogenicity quantification method, comprising: receiving an ultrasound image by an ultrasonic imaging device, and the ultrasound image comprising a plurality of pixel points, each pixel point having a grayscale value; choosing a region of interest (ROI) in the ultrasound image; counting the grayscale values of the pixel points in the ROI to obtain an average value of the ROI and a standard deviation of the ROI; excluding pixel points in the ROI with the grayscale values smaller than the sum of the minimum value in the grayscale image and the product of a first scaling factor and the standard deviation of the ROI; excluding the pixel points in the ROI with the grayscale values larger than the sum of the average value of the ROI and the product of a second scaling factor and the standard deviation of the ROI; averaging the grayscale values of the remaining pixel points in the ROI to obtain an average value of interest; choosing a reference region nonoverlapped with the ROI in the ultrasound image; averaging the grayscale values of the remaining pixel points in the reference region to obtain an average value of reference; and calculating the difference between the average value of interest and the average value of reference to obtain an echogenicity index.

In one embodiment of the invention, the present invention further provides an echogenicity quantification system, comprising: an ultrasonic imaging device for receiving an ultrasound image, and the ultrasound image comprising a plurality of pixel points, each pixel point having a grayscale value; an analyzing unit of a ROI connected to the ultrasonic imaging device for choosing the ROI in the ultrasound image; counting the grayscale values of the pixel points in the ROI to obtain an average value of the ROI and a standard deviation of the ROI; excluding the pixel points in the ROI with the grayscale values smaller than the sum of the minimum value in the grayscale image and the product of a first scaling factor and the standard deviation of the ROI; excluding the pixel points in the ROI with the grayscale values larger than the sum of the average value of the ROI and the product of a second scaling factor and the standard deviation of the ROI; and averaging the grayscale values of the remaining pixel points in the ROI to obtain an average value of interest; an analyzing unit of a reference region connected to the ultrasonic imaging device for choosing a reference region nonoverlapped with the ROI in the ultrasound image; and averaging the grayscale values of the remaining pixel points in the reference region to obtain an average value of reference; and a computing unit connected to the analyzing unit of the ROI and the analyzing unit of the reference region for calculating the difference between the average value of interest and the average value of reference to obtain an echogenicity index.

With the implementation of the present invention, an echogenicity index for quantification echogenicity is acquired. The echogenicity index applied in the clinical diagnosis, especially the ultrasonic diagnosis for thyroid nodule, has proved to increase the accuracy of diagnosis due to its excellent specificity.

The detailed features and advantages of the present invention will be described in detail with reference to the preferred embodiment so as to enable persons skilled in the art to gain insight into the technical disclosure of the present invention, implement the present invention accordingly, and readily understand the objectives and advantages of the present invention by perusal of the contents disclosed in the specification, the claims, and the accompanying drawings.

### BRIEF DESCRIPTION OF THE DRAWINGS

FIG. 1 is a diagram of the workflow of the echogenicity quantification method in one embodiment of the present invention.
FIG. 2 is a schematic diagram of the retrieved ROI and reference region in one embodiment of the present invention.
FIG. 3 is another schematic diagram of the retrieved reference region in one embodiment of the present invention.
FIG. 4 is a diagram of the imaged echogenicity index in one embodiment of the present invention.
FIG. 5A to FIG. 5C show the diagrams of imaged contrast with different p value in one embodiment of the present invention.
FIG. 6A to FIG. 6B show the schematic diagrams of phantom image comprising different echo features in one embodiment of the present invention.
FIG. 7 shows a diagram of the compared ultrasonic imaging device (GE) and the baseline ultrasonic imaging device (Philips).
FIG. 8 shows a diagram of echogenicity quantification system in one embodiment of the present invention.

### DETAILED DESCRIPTION OF THE INVENTION

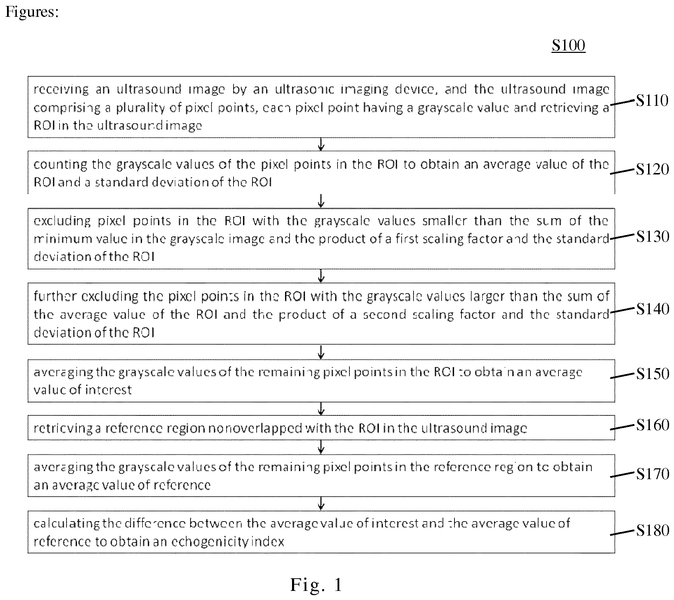

As shown in Fig. 1, an embodiment of the present invention discloses an echogenicity quantification method S100 comprising: receiving an ultrasound image by an ultrasonic imaging device, and the ultrasound image comprising a plurality of pixel points, each pixel point having a grayscale value; choosing a ROI in the ultrasound image (step S110); counting the grayscale values of the pixel points in the ROI to obtain an average value of the ROI and a standard deviation of the ROI (step S120); excluding pixel points in the ROI with the grayscale values smaller than the sum of the minimum value in the grayscale image and the product of a first scaling factor and the standard deviation of the ROI (step S130); further excluding the pixel points in the ROI with the grayscale values larger than the sum of the average value of the ROI and the product of a second scaling factor and the standard deviation of the ROI (step S140); averaging the grayscale values of the remaining pixel points in the ROI to obtain an average value of interest (step S150); choosing a reference region nonoverlapped with the ROI in the ultrasound image (step S160); averaging the grayscale values of the remaining pixel points in the reference region to obtain an average value of reference (step S170); and calculating the difference between the average value of interest and the average value of reference to obtain an echogenicity index (step S180).

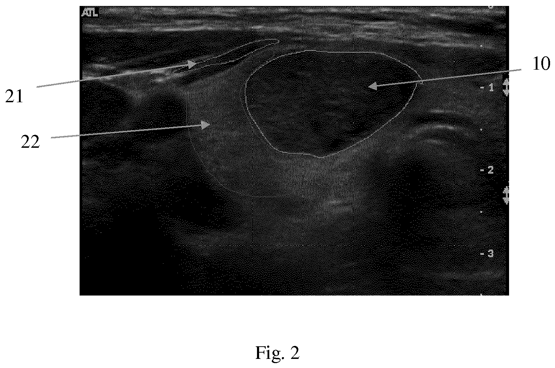

As shown in FIG. 2, the method in the embodiment of the present invention may be applied on the ultrasonic device, or may be applied in the computer system which may be connected to the ultrasonic device. After the ultrasound image is captured by the ultrasonic device and the user selects the ROI 10 in the captured ultrasound image, the step S110 is performed. The processing unit or the computer system can directly receive the aforementioned ultrasound image, and the ultrasound image comprises a plurality of pixel points with grayscale values. The ROI 10 is retrieved in the ultrasound image. The ORI 10, such as the region of thyroid nodule, is usually the region where lesions are located or where users are interested.

In the step S120, the grayscale scale values of those pixel points in the ROI 10 are counted. The average of the above grayscale values is calculated to be an average value of the ROI (n1), and the standard deviation of the above grayscale values is calculated to be a standard deviation of the ROI (m1).

In a preferred embodiment, the counting may be performed on the grayscale values of all the pixel points in the ROI 10.

In a preferred embodiment, in order to exclude a circular portion of low echogenicity (halo portion) outside the tumor or to eliminate the variation of the selected profile by different users, the profile of the ROI 10 may be constricted a specific circular range such as 5 to 10 pixels of width. After the above correction, the grayscale values of the rest of pixel points are counted to obtain the average value (n1) and the standard deviation (m1) of the ROI 10 with better quantitative evaluation.

Similarly, in a better embodiment, the pixel point in the ROI 10 may be excluded if its grayscale value is the outlier of the grayscale values or in a meaningless range, and then the grayscale values of the remaining pixel points are counted. It also helps to obtain a value with better quantitative evaluation. The outlier of the grayscale values and the meaningless range may be different due to various tissues.

The value in the meaningless range may be the grayscale value of anechoic region. Step S130 is performed to exclude the anechoic region in the ROI 10. The principle is to exclude the pixel points in the ROI 10 with the grayscale values smaller than the sum of the minimum value (Gₘᵢₙ) in the grayscale image and a product of a first scaling factor (a) and the standard deviation (m1). In other words, the value in the meaningless range may be Gₘᵢₙ + a×m1.

The outlier of the grayscale value may be the grayscale value of the hyperechoic foci. The step S140 is performed to exclude the hyperechoic foci in the ROI 10. Principally, pixel points in the ROI 10 with the grayscale values larger than the sum of the average value of the ROI (n1) and the product of a second scaling factor (b) and the standard deviation of the ROI (ml) are excluded. That is to say, the outlier of the grayscale value may be n1+(b×m1), wherein the first scaling factor (a) may be a value within a range of 0 to 0.5, and the second scaling factor (b) may be a value within a range of 2 to 5.

In one preferred embodiment, the anechoic region may be excluded before the step S140. The grayscale values of the remaining pixel points in the ROI 10 are counted to obtain an average value and a standard deviation, and these results may be used to update the average value of the ROI (n1) and the standard deviation of the ROI (m1). Then, step S140 may be performed.

Afterwards, step 5150 is performed. After excluding the above pixel points, the grayscale values of the remaining pixel points in the ROI 10 are averaged to obtain an average value of interest (µROI) . Then, in the step 5160, a reference region 20 nonoverlapped with the ROI 10 in the ultrasound image is retrieved.

In one better embodiment, the reference region 20 may be a region selected from the ultrasound image by a user. The user may select a normal tissue with large area outside the lesion (such as the thyroid tissue region 22), a muscle tissue dose to the surface (such as region 21), or a superficial area in the image according to the tissue anatomy to be the reference region 20, so as to build the contrast region of the echogenicity in the same image.

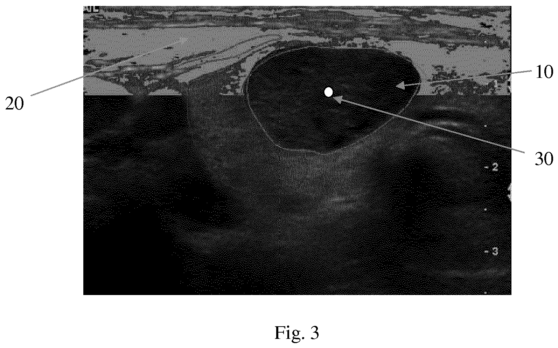

Referring to Fig 3, in one preferred embodiment, the reference region 20 may be selected manually or automatically. The reference region 20 may be situated in an image area which is above the centroid 30 of the ROI 10 and not in the ROI 10 as shown in the purple portion of the Fig. 3. In other words, the reference region 20 may be situated above the centroid 30 and outside of the ROI 10 in the ultrasound image. However, the definition of the scope is not limited hereto.

In the Step S170, the grayscale values of the remaining pixel points in the reference region 20 are averaged to obtain an average value of reference (pRef).

In one preferred embodiment, the average value of reference (pRef) may be calculated using all the pixel points in the reference region 20 if not excluding any reference pixel points.

In a better embodiment, the quantification method of the present invention may further comprises a step of excluding the pixel points with a grayscale value in the meaningless range before the calculation of the average value of reference (pRef). First of all, the grayscale values of the above pixel points in the reference regions 20 are counted to obtain an average value of the reference region (n2) and a standard deviation of the reference region (m2). Consequently, the pixel points in the reference region 20 with the grayscale values smaller than the sum of the minimum value (Gₘᵢₙ) in the grayscale image and a product of a third scaling factor (c) and the standard deviation of the reference region (m2) are excluded. That is to say, the grayscale value in the meaningless range may be Gₘᵢₙ +cxm2.

In one further preferred embodiment, the quantification method of the present invention may further comprises a step of excluding the pixel points in the reference region 20 of which grayscale value is the outlier of all the grayscale values in the reference region 20 before the calculation of the average value of reference (µRef). Principally, pixel points in the reference region 20 with the grayscale values larger than the sum of the average value of the reference region (n2) and the product of a fourth scaling factor (d) and the standard deviation of the reference region (m2) are excluded. That is to say, the outlier of the grayscale value may be n2+(d×m2), wherein the third scaling factor (c) may be a value within a range of 0 to 0.5, and the fourth scaling factor (d) may be a value within a range of 0 to 5.

In one preferred embodiment, the average value and the standard deviation of the grayscale values of the remaining pixel points in the reference region 20 are counted after excluding the grayscale values within the meaningless range. The results may be used to update the average value of the reference region and the standard deviation of the reference region. Finally, the outlier of the grayscale value may be excluded.

Finally, the difference between the average value of interest and the average value of reference is calculated to obtain an echogenicity index (EI) in the step S180. That is, the echogenicity index is defined as µROI-µRef.

In one preferred embodiment, the echogenicity index may be further normalized with µRef. The echogenicity index may express the echogenicity level of the ROI (such as thyroid nodules) in the grayscale ultrasound image, and may be used as a basis of clinical diagnosis analysis to figure out what the tissue echogenicity means after the quantification of ultrasound image.

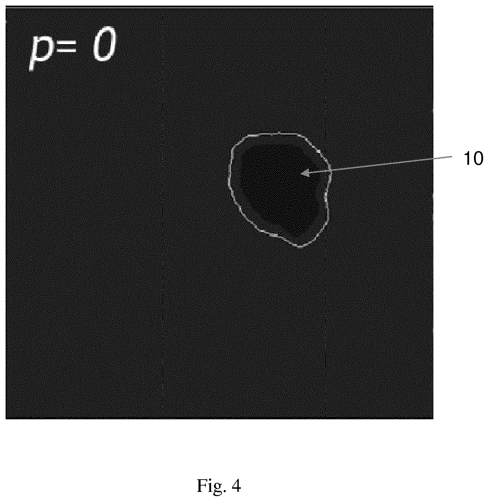

As shown in Fig. 4, in one preferred embodiment, the quantification method of the present invention may further comprise visualizing the echogenicity index by filling corresponding grayscale color in the ROI 10 and outside the ROI 10. The detailed steps is as following: setting the grayscale values of the an image area outside the ROI 10 to a background value related with visual sensitivity; setting the grayscale values of the pixel points within the ROI 10 to a value, wherein the value is the product of the background value and the average value of interest divided by the average value of reference; and plotting a contrast image of color level.

If the resulted grayscale value of the ROI is larger than the maximum value of the displayed color level, then the grayscale value is set to the maximum value. In contrast, if the resulted grayscale value of the ROI is smaller than the minimum value of the displayed color level, then the grayscale value is set to the minimum value.

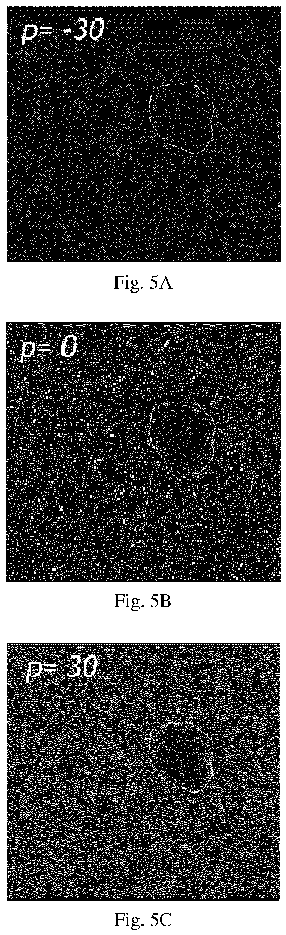

In one preferred embodiment, the quantification method of the present invention may further comprise that the grayscale values outside the ROI 10 are defined to equal to x+y×p with the modification of visual sensitivity (p) by the user, wherein x and y are constants which make the grayscale value between the minimum and the maximum of the displayed color level to be the visualization background for the image. As shown in Fig. 5A to 5C, users may adjust the visual contrast by adjusting p value. The x in the Fig. 5A to 5C is set as 41.31, y is set as 0.8. The larger the p value, the contrast is sharper after visualization. The invention is not limited hereto.

In order to ensure the accuracy of the ultrasound image, the echogenicity quantification method utilizes a transform function to correct the grayscale value of the ultrasound image. The method includes that a phantom with a plurality of echo intensity areas is imaged repeatedly by an ultrasonic imaging device to obtain a plurality of first phantom images. The first phantom images comprise a plurality of pixel points to be corrected, and each pixel point to be corrected has a grayscale value.

Consequently, the grayscale values of the pixel points to be corrected corresponding to one of the echo intensity areas in each first phantom image are counted to obtain an average to be corrected of the echo intensity area. Repeating the aforementioned step, a plurality of averages to be corrected are obtained corresponding to different echo intensity areas respectively.

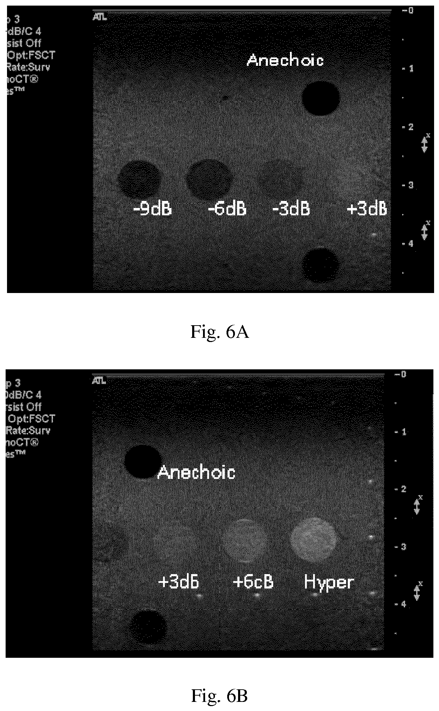

Referring to Fig. 6A and Fig. 6B, in one preferred embodiment, the ultrasonic imaging device (GE) and a baseline ultrasonic imaging device (Philips) scanned the phantom to acquire seven sets of images, including the set of -9dB, -6dB, -3dB, 0dB, 3dB, 6dB and Hyper. Every set of images has ten images. Then, the result of the averages to be corrected and the baseline averages is obtained as in Table 1:

**Table 1**

| | **-9dB** | **-6dB** | **-3dB** | **0dB** | **+3dB** | **+6dB** | **Hyper** |
|---|---|---|---|---|---|---|---|
| **Philips** | 15.86 | 23.18 | 40.38 | 53.82 | 69.10 | 81.25 | 101.82 |
| **GE** | 20.53 | 32.40 | 46.46 | 57.67 | 72.52 | 81.73 | 90.46 |

Finally, the plurality of baseline averages are obtained through a baseline ultrasonic imaging device. The average to be corrected and the baseline average of the same echo intensity area are compared, and a transform function of the averages to be corrected and the baseline averages of different echo intensity areas is derived with a trend line which is derived by adding a minimum grayscale range and a maximum grayscale range.

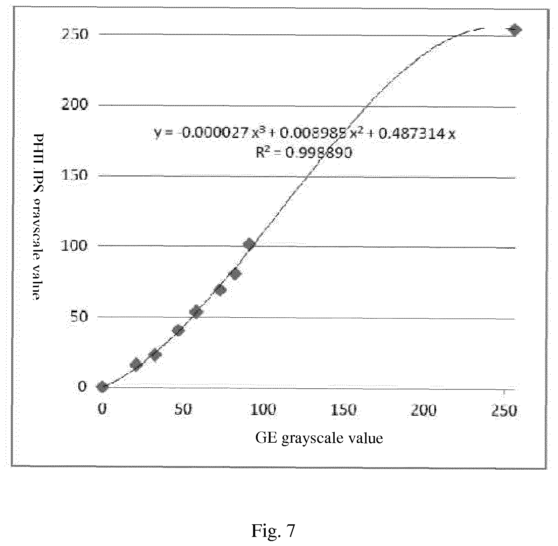

As shown in Fig. 7, in a preferred embodiment, two values (0 and 225) are put into the grayscale values of the compared ultrasonic imaging device (GE) and the baseline ultrasonic imaging device (Philips) in Table 1, and then the scatter plot is depicted. Furthermore, the transform function for transforming the image of the device to be corrected (GE) to the image of the reference device (Philips) is fitted by a function of cubic polynomial. As shown in Fig. 7, the fitted transform function of a function of cubic polynomial is y = 0.000027*x*³ + 0.008988*x*² + 0.487314*x*, *R*² = 0.998890. The clinical image of the ultrasonic imaging device (GE) may change its grayscale characteristic to resemble the baseline ultrasonic imaging device (Philips) through the transform function as so to acquire similar echogenicity ∘ The present invention is not limited hereto.

In one preferred embodiment, the phantom with a plurality of echo intensity areas is imaged repeatedly by the baseline ultrasonic imaging device to obtain a plurality of second phantom images having a plurality of baseline pixel points, wherein each baseline pixel point has a grayscale value. The grayscale values of the baseline pixel points corresponding to one of the echo intensity areas in each second phantom image are counted to obtain the baseline average of the echo intensity area. The aforementioned step is repeated corresponding to different echo intensity areas to obtain all the baseline averages.

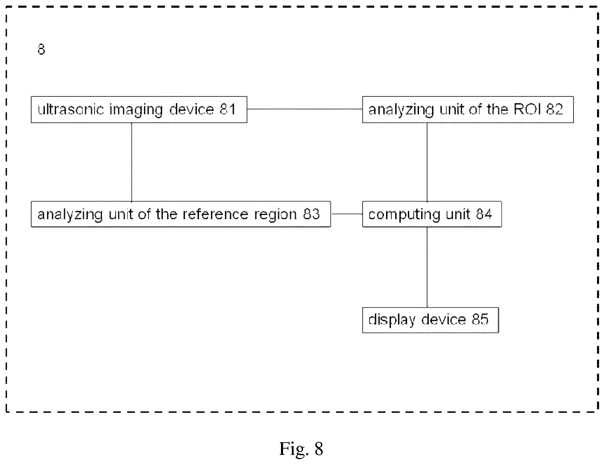

As shown in Fig. 8, the embodiment of present invention also discloses an echogenicity quantification system 8 comprising an ultrasonic imaging device 81, an analyzing unit of the ROI 82, an analyzing unit of the reference area 83, and a computing unit 84. The ultrasonic imaging device 81 receives an ultrasound image comprising a plurality of pixel points, and each pixel point has a grayscale value. The analyzing unit of the ROI 82 connected to the ultrasonic imaging device 81 retrieves the ROI 10 in the ultrasound image. The grayscale values of the pixel points in the ROI 10 are counted to obtain an average value of the ROI and a standard deviation of the ROI. Then, the analyzing unit of the ROI 82 excludes the pixel points in the ROI 10 with the grayscale values smaller than the sum of the minimum value in the grayscale image and the product of a first scaling factor and the standard deviation of the ROI, and excludes the pixel points in the ROI 10 with the grayscale values larger than the sum of the average value of the ROI and the product of a second scaling factor and the standard deviation of the ROI. Finally, the grayscale values of the remaining pixel points in the ROI 10 are averaged to obtain an average value of interest. The analyzing unit of a reference region 83 connected to the ultrasonic imaging device 81 retrieves a reference region 20 nonoverlapped with the ROI 10 in the ultrasound image, and averages the grayscale values of the remaining pixel points in the reference region 20 to obtain an average value of reference. A computing unit 84 connected to the analyzing unit of the ROI 82 and the analyzing unit of the reference region 83 calculates the difference between the average value of interest and the average value of reference to obtain an echogenicity index.

In a preferred embodiment, the echogenicity quantification system 8 further includes a display device 85 connected to the computing unit 84. The display device 85 sets the grayscale values of an image area outside the ROI 10 to a background value related with visual sensitivity; sets the grayscale values of the pixel points within the ROI 10 to a value, wherein the value is the product of the background value and the average of interest divided by the average of reference, and then plots a contrast image of color level.

The features of the present invention are disclosed above by the preferred embodiment to allow persons skilled in the art to gain insight into the contents of the present invention and implement the present invention accordingly. The preferred embodiment of the present invention should not be interpreted as restrictive of the scope of the present invention. Hence, all equivalent modifications or amendments made to the aforesaid embodiment should fall within the scope of the appended claims.

## Claims

1. An echogenicity quantification method, comprising:
receiving an ultrasound image by an ultrasonic imaging device, and the ultrasound image comprises a plurality of pixel points, each pixel point has a grayscale value;
choosing a region of interest, ROI, in the ultrasound image;
counting the grayscale values of the pixel points in the ROI to obtain an average value of the grayscale values of the pixel points in the ROI and a standard deviation of the grayscale values of the pixel points in the ROI;
excluding the pixel points in the ROI with the grayscale values smaller than the sum of the minimum grayscale value in the grayscale image and the product of a first scaling factor and the standard deviation of the grayscale values of the pixel points in the ROI;
excluding the pixel points in the ROI with the grayscale values larger than the sum of the average value of the grayscale values of the pixel points in the ROI and the product of a second scaling factor and the standard deviation of the grayscale values of the pixel points in the ROI;
averaging the grayscale values of the remaining pixel points in the ROI to obtain an average value of interest;
choosing a reference region which is nonoverlapped with the ROI in the ultrasound image;
averaging the grayscale values of the remaining pixel points in the reference region to obtain an average value of reference; and
calculating the difference between the average value of interest and the average value of reference to obtain an echogenicity index.

2. The quantification method of claim 1, wherein the first scaling factor is a value within a range of 0 to 0.5, and the second scaling factor is a value within a range of 2 to 5.

3. The quantification method of claim 1, further comprising:
counting the grayscale values of the pixel points in the reference region to obtain an average value of the grayscale values of the pixel points in the reference region and a standard deviation of the grayscale values of the pixel points in the reference region; and
excluding the pixel points in the reference region with the grayscale values smaller than the sum of the minimum grayscale value in the grayscale image and a product of a third scaling factor and the standard deviation of the grayscale values of the pixel points in the reference region.

4. The quantification method of claim 1, further comprising:
excluding the pixel points in the reference region with the grayscale values larger than the sum of the average value of the grayscale value of the pixel points in the reference region and the product of a fourth scaling factor and the standard deviation of the grayscale values of the pixels in the reference region.

5. The quantification method of claim 4 wherein the third scaling factor is a value within a range of 0 to 0.5, and the fourth scaling factor is a value within a range of 0 to 5.

6. The quantification method of claim 1, wherein the reference region is situated in an image area which is above the centroid of the ROI and outside of the ROI.

7. The quantification method of claim 1, further comprising:
calibrating the grayscale values in the ultrasound image by a transform function.

8. An echogenicity quantification system, comprising:
an ultrasonic imaging device for receiving an ultrasound image, and the ultrasound image comprises a plurality of pixel points, each pixel point has a grayscale value;
an analyzing unit of a region of interest, ROI, connected to the ultrasonic imaging device for choosing a ROI in the ultrasound image; counting the grayscale values of the pixel points in the ROI to obtain an average value of the grayscale values of the pixel points in the ROI and a standard deviation of the grayscale values of the pixel points in the ROI; excluding the pixel points in the ROI with the grayscale values smaller than the sum of the minimum grayscale value in the grayscale image and the product of a first scaling factor and the standard deviation of the grayscale values of the pixel points in the ROI; excluding the pixel points in the ROI with the grayscale values larger than the sum of the average value of the grayscale values of the pixel points in the ROI and the product of a second scaling factor and the standard deviation of the grayscale values of the pixel points in the ROI; and averaging the grayscale values of the remaining pixel points in the ROI to obtain an average value of interest;
an analyzing unit of a reference region connected to the ultrasonic imaging device for choosing a reference region which is nonoverlapped with the ROI in the ultrasound image; and averaging the grayscale values of the remaining pixel points in the reference region to obtain an average value of reference; and
a computing unit connects to the analyzing unit of the ROI and the analyzing unit of the reference region for calculating the difference between the average value of interest and the average value of reference to obtain an echogenicity index.

9. An echogenicity quantification system of claim 8, wherein the first scaling factor is a value within a range of 0 to 0.5, and the second scaling factor is a value within a range of 2 to 5.

10. The echogenicity quantification system of claim 8, the analyzing unit of the reference region further:
counting the grayscale values of the pixel points in the reference region to obtain an average value of the grayscale values of the pixel points in the reference region and a standard deviation of the grayscale values of the pixel points in the reference region; and
excluding the pixel points in the reference region with the grayscale values smaller than the sum of the minimum grayscale value in the grayscale image and a product of a third scaling factor and the standard deviation of the grayscale values of the pixel points in the reference region.

11. The echogenicity quantification system of claim 10, the analyzing unit of the reference region further:
excluding the pixel points in the reference region with the grayscale values larger than the sum of the average value of the grayscale values of the pixel points in the reference region and the product of a fourth scaling factor and the standard deviation of the grayscale values of the pixel points in the reference region.

12. The echogenicity quantification system of claim 11, wherein the third scaling factor is a value within a range of 0 to 0.5, and the fourth scaling factor is a value within a range of 0 to 5.

13. The echogenicity quantification system of claim 8, wherein the reference region is situated in an image area which is above the centroid of the ROI and outside of the ROI.

14. The echogenicity quantification system of claim 8, the ultrasonic imaging device further:
calibrating the grayscale values in the ultrasound image by a transform function.

15. The quantification method of claim 7, wherein the transform function is derived from:
imaging a phantom with a plurality of echo intensity areas repeatedly by an ultrasonic imaging device to obtain a plurality of first phantom images having a plurality of pixel points to be corrected, wherein each pixel point to be corrected has a grayscale value;
counting the grayscale values of the pixel points to be corrected corresponding to one of the echo intensity areas in each first phantom image to obtain an average to be corrected of the echo intensity area;
repeating the aforementioned step to obtain a plurality of averages to be corrected corresponding to different echo intensity areas; and
obtaining a plurality of baseline averages through a baseline ultrasonic imaging device, comparing the average to be corrected and the baseline average of the same echo intensity areas and deriving a transform function of the averages to be corrected and the baseline averages of different echo intensity areas by adding a minimum grayscale range and a maximum grayscale range to derive a trend line.

16. The quantification method of claim 15, wherein the baseline averages are obtained by: imaging the phantom with a plurality of echo intensity areas repeatedly by the baseline ultrasonic imaging device to obtain a plurality of second phantom images having a plurality of baseline pixel points, wherein each baseline pixel point has a grayscale value; counting the grayscale values of the baseline pixel points corresponding to one of the echo intensity areas in each second phantom image to obtain the baseline average of the echo intensity area; and repeating the aforementioned step corresponding to different echo intensity areas.

## Patentansprüche

1. Echogenitätsquantifizierungsverfahren mit folgenden Schritten:
Empfangen eines Ultraschallbildes von einer Ultraschall-Bildgebungsvorrichtung, wobei das Ultraschallbild mehrere Pixelpunkte aufweist und jeder Pixelpunkt einen Grauwert aufweist;
Auswählen eines interessierenden Bereichs, ROI, auf dem Ultraschallbild;
Zählen der Grauwerte der Pixelpunkte im ROI, um einen Durchschnittswert der Grauwerte der Pixelpunkte im ROI zu erhalten sowie eine Standardabweichung der Grauwerte der Pixelpunkte im ROI;
Ausschließen der Pixelpunkte im ROI mit Grauwerten kleiner als die Summe aus dem Mindestgrauwert im Graustufenbild und dem Produkt aus einem ersten Skalierungsfaktor und der Standardabweichung der Grauwerte der Pixelpunkte im ROI;
Ausschließen der Pixelpunkte im ROI mit Grauwerten größer als die Summe aus dem Durchschnittswert der Grauwerte der Pixelpunkte im ROI und dem Produkt aus einem zweiten Skalierungsfaktor und der Standardabweichung der Grauwerte der Pixelpunkte im ROI;
Bilden des Durschnitts der Grauwerte der verbleibenden Pixelpunkte im ROI, um einen durchschnittlichen interessierenden Wert zu erhalten;
Auswählen eines Referenzbereichs, der nicht mit dem ROI im Ultraschallbild überlappt;
Bilden des Durchschnitts der Grauwerte der verbleibenden Pixelpunkte im Referenzbereich, um einen durchschnittlichen Referenzwert zu erhalten; und
Berechnen der Differenz zwischen dem durchschnittlichen interessierenden Wert und dem durchschnittlichen Referenzwert, um einen Echogenitätsindex zu erhalten.

2. Quantifizierungsverfahren nach Anspruch 1, wobei der erste Skalierungsfaktor ein Wert innerhalb eines Bereichs von 0 bis 0,5 ist und der zweite Skalierungsfaktor ein Wert innerhalb eines Bereichs von 2 bis 5.

3. Quantifizierungsverfahren nach Anspruch 1 mit ferner folgenden Schritten:
Zählen der Grauwerte der Pixelpunkte im Referenzbereich, um einen Durchschnittswert der Grauwerte der Pixelpunkte im Referenzbereich zu erhalten sowie eine Standardabweichung der Grauwerte der Pixelpunkte im Referenzbereich; und
Ausschließen der Pixelpunkte im Referenzbereich mit Grauwerten kleiner als die Summe aus dem Mindestgrauwert im Graustufenbild und dem Produkt aus einem dritten Skalierungsfaktor und der Standardabweichung der Grauwerte der Pixelpunkte im Referenzbereich.

4. Quantifizierungsverfahren nach Anspruch 1 mit ferner folgendem Schritt:
Ausschließen der Pixelpunkte im Referenzbereich mit Grauwerten größer als die Summe aus dem Durchschnittswert der Grauwerte der Pixelpunkte im Referenzbereich und dem Produkt aus einem vierten Skalierungsfaktor und der Standardabweichung der Grauwerte der Pixel im Referenzbereich.

5. Quantifizierungsverfahren nach Anspruch 4, wobei der dritte Skalierungsfaktor ein Wert innerhalb eines Bereichs von 0 bis 0,5 ist und der vierte Skalierungsfaktor ein Wert innerhalb eines Bereichs von 0 bis 5.

6. Quantifizierungsverfahren nach Anspruch 1, wobei sich der Referenzbereich in einem Bildbereich befindet, der oberhalb des Zentroids des ROI und außerhalb des ROI liegt.

7. Quantifizierungsverfahren nach Anspruch 1 mit ferner folgendem Schritt:
Kalibrieren der Grauwerte im Ultraschallbild mittels einer Transformationsfunktion.

8. Echogenitätsquantifizierungssystem mit:
einer Ultraschall-Bildgebungsvorrichtung zum Empfangen eines Ultraschallbildes, wobei das Ultraschallbild mehrere Pixelpunkte aufweist, wobei jeder Pixelpunkt einen Grauwert aufweist;
einer Analyseeinheit eines interessierenden Bereichs, ROI, die mit der Ultraschall-Bildgebungsvorrichtung verbunden ist zum Auswählen eines ROI im Ultraschallbild, zum Zählen der Grauwerte der Pixelpunkte im ROI, um einen Durchschnittswert der Grauwerte der Pixelpunkte im ROI zu erhalten sowie eine Standardabweichung der Grauwerte der Pixelpunkte im ROI, zum Ausschließen der Pixelpunkte im ROI mit Grauwerten kleiner als die Summe aus dem Mindestgrauwert im Graustufenbild und dem Produkt aus einem ersten Skalierungsfaktor und der Standardabweichung der Grauwerte der Pixelpunkte im ROI, zum Ausschließen der Pixelpunkte im ROI mit Grauwerten größer als die Summe aus dem Durchschnittswert der Grauwerte der Pixelpunkte im ROI und dem Produkt aus einem zweiten Skalierungsfaktor und der Standardabweichung der Grauwerte der Pixelpunkte im ROI, und zum Bilden des Durchschnitts der Grauwerte der verbleibenden Pixelpunkte im ROI, um einen interessierenden Durchschnittswert zu erhalten;
einer Analyseeinheit eines Referenzbereichs, der mit der Ultraschall-Bildgebungsvorrichtung verbunden ist zum Auswählen eines Referenzbereichs, der nicht mit dem ROI im Ultraschallbild überlappt, und zur Durchschnittsbildung der Grauwerte der verbleibenden Pixelpunkte im Referenzbereich, um einen durchschnittlichen Referenzwert zu erhalten; und
einer Recheneinheit, die mit der Analyseeinheit des ROI verbunden ist sowie mit der Analyseeinheit des Referenzbereichs zum Berechnen der Differenz zwischen dem durchschnittlichen interessierendem Wert und dem durchschnittlichen Referenzwert, um einen Echogenitätsindex zu erhalten.

9. Echogenitätsquantifizierungssystem nach Anspruch 8, wobei der erste Skalierungsfaktor ein Wert innerhalb eines Bereichs zwischen 0 und 0,5 ist und der zweite Skalierungsfaktor ein Wert innerhalb eines Bereichs von 2 bis 5.

10. Echogenitätsquantifizierungssystem nach Anspruch 8, wobei die Analyseeinheit des Referenzbereichs ferner folgende Schritte umfasst:
Zählen der Grauwerte der Pixelpunkte im Referenzbereich, um einen Durchschnittswert der Grauwerte der Pixelpunkte im Referenzbereich zu erhalten sowie eine Standardabweichung der Grauwerte der Pixelpunkte im Referenzbereich; und
Ausschließen der Pixelpunkte im Referenzbereich mit Grauwerten kleiner als die Summe aus dem Mindestgrauwert im Graustufenbild und dem Produkt aus einem dritten Skalierungsfaktor und der Standardabweichung der Grauwerte der Pixelpunkte im Referenzbereich.

11. Echogenitätsquantifizierungssystem nach Anspruch 10, wobei die Analyseeinheit des Referenzbereichs ferner folgenden Schritt umfasst:
Ausschließen der Pixelpunkte im Referenzbereich mit Grauwerten größer als die Summe aus dem Durchschnittswert der Grauwerte der Pixelpunkte im Referenzbereich und dem Produkt aus einem vierten Skalierungsfaktor und der Standardabweichung der Grauwerte der Pixelpunkte im Referenzbereich.

12. Echogenitätsquantifizierungssystem nach Anspruch 11, wobei der dritte Skalierungsfaktor ein Wert innerhalb eines Bereichs von 0 bis 0,5 ist und der vierte Skalierungsfaktor ein Wert innerhalb eines Bereichs von 0 bis 5.

13. Echogenitätsquantifizierungssystem nach Anspruch 8, wobei sich der Referenzbereich in einem Bildbereich befindet, der oberhalb des Schwerpunkts des ROI und außerhalb des ROI liegt.

14. Echogenitätsquantifizierungssystem nach Anspruch 8, wobei die Ultraschall-Bildgebungsvorrichtung ferner folgenden Schritt umfasst:
Kalibrieren der Grauwerte im Ultraschallbild mittels einer Transformationsfunktion.

15. Quantifizierungsverfahren nach Anspruch 7, wobei die Transformationsfunktion wie folgt abgeleitet wird:
wiederholtes Abbilden eines Phantoms mit mehreren Echointensitätsbereichen mittels einer Ultraschall-Bildgebungsvorrichtung, um mehrere erste Phantombilder mit mehreren zu korrigierenden Pixelpunkten zu erhalten, wobei jeder zu korrigierender Pixelpunkt einen Grauwert aufweist;
Zählen der Grauwerte der zu korrigierenden Pixelpunkte, die einem der Echointensitätsbereiche in jedem ersten Phantombild entsprechen, um einen zu korrigierenden Durchschnitt des Echointensitätsbereichs zu erhalten;
Wiederholen des oben beschriebenen Schritts, um mehrere zu korrigierende Durchschnitte zu erhalten, die verschiedenen Echointensitätsbereichen entsprechen; und
Erhalten mehrerer Grundliniendurchschnitte durch eine Ultraschall-Bildgebungsvorrichtung; Vergleichen des zu korrigierenden Durchschnitts und des Grundliniendurchschnitts der gleichen Echointensitätsbereiche und Ableiten einer Transformationsfunktion der zu korrigierenden Durchschnitte und der Grundliniendurchschnitte unterschiedlicher Echointensitätsbereiche durch Hinzufügen eines Mindestgrauwertbereichs und eines Maximalgrauwertbereichs zum Ableiten einer Trendlinie.

16. Quantifizierungsverfahren nach Anspruch 15, wobei die Grundliniendurchschnitte wie folgt erhalten werden:
wiederholten Abbilden eines Phantoms mit mehreren Echointensitätsbereichen mittels einer Ultraschall-Bildgebungsvorrichtung, um mehrere zweite Phantombilder mit mehreren Grundlinienpixelpunkten zu erhalten, wobei jeder Grundlinienpixelpunkt einen Grauwert aufweist;
Zählen der Grauwerte der Grundlinienpixelpunkte, die einem der Echointensitätsbereiche in jedem zweiten Phantombild entsprechen, um den Grundliniendurchschnitt des Echointensitätsbereichs zu erhalten; und
Wiederholen des oben beschriebenen Schritts entsprechend unterschiedlicher Echointensitätsbereiche.

## Revendications

1. Procédé de quantification d'échogénicité, comprenant :
la réception d'une image par ultrason par un dispositif d'imagerie par ultrasons, et l'image par ultrason comprend une pluralité de points de pixel, chaque point de pixel a une valeur d'échelle de gris ;
le choix d'une région d'intérêt, RDI, dans l'image par ultrason ;
le comptage des valeurs d'échelle de gris des points de pixel dans la RDI pour obtenir une valeur moyenne des valeurs d'échelle de gris des points de pixel dans la RDI et un écart-type des valeurs d'échelle de gris des points de pixel dans la RDI ;
l'exclusion des points de pixel dans la RDI avec les valeurs d'échelle de gris plus petites que la somme de la valeur d'échelle de gris minimale dans l'image d'échelle de gris et du produit d'un premier facteur d'échelle et de l'écart-type des valeurs d'échelle de gris des points de pixel dans la RDI ;
l'exclusion des points de pixel dans la RDI avec les valeurs d'échelle de gris plus grandes que la somme de la valeur moyenne des valeurs d'échelle de gris des points de pixel dans la RDI et du produit d'un deuxième facteur d'échelle et de l'écart-type des valeurs d'échelle de gris des points de pixel dans la RDI ;
le moyennage des valeurs d'échelle de gris des points de pixel restants dans la RDI pour obtenir une valeur d'intérêt moyenne ;
le choix d'une région de référence qui est non chevauchée par la RDI dans l'image par ultrason ;
le moyennage des valeurs d'échelle de gris des points de pixel restants dans la région de référence pour obtenir une valeur de référence moyenne ; et
le calcul de la différence entre la valeur d'intérêt moyenne et la valeur de référence moyenne pour obtenir un indice d'échogénicité.

2. Procédé de quantification selon la revendication 1, dans lequel le premier facteur d'échelle est une valeur dans une plage de 0 à 0,5, et le deuxième facteur d'échelle est une valeur dans une plage de 2 à 5.

3. Procédé de quantification selon la revendication 1, comprenant en outre :
le comptage des valeurs d'échelle de gris des points de pixel dans la région de référence pour obtenir une valeur moyenne des valeurs d'échelle de gris des points de pixel dans la région de référence et un écart-type des valeurs d'échelle de gris des points de pixel dans la région de référence ; et
l'exclusion des points de pixel dans la région de référence avec les valeurs d'échelle de gris plus petites que la somme de la valeur d'échelle de gris minimale dans l'image d'échelle de gris et un produit d'un troisième facteur d'échelle et de l'écart-type des valeurs d'échelle de gris des points de pixel dans la région de référence.

4. Procédé de quantification selon la revendication 1, comprenant en outre :
l'exclusion des points de pixel dans la région de référence avec les valeurs d'échelle de gris plus grandes que la somme de la valeur moyenne de la valeur d'échelle de gris des points de pixel dans la région de référence et du produit d'un quatrième facteur d'échelle et de l'écart-type des valeurs d'échelle de gris des pixels dans la région de référence.

5. Procédé de quantification selon la revendication 4, dans lequel le troisième facteur d'échelle est une valeur dans une plage de 0 à 0,5, et le quatrième facteur d'échelle est une valeur dans une plage de 0 à 5.

6. Procédé de quantification selon la revendication 1, dans lequel la région de référence est située dans une zone d'image qui est au-dessus du centroïde de la RDI et en dehors de la RDI.

7. Procédé de quantification selon la revendication 1, comprenant en outre :
l'étalonnage des valeurs d'échelle de gris dans l'image par ultrason par une fonction de transformée.

8. Système de quantification d'échogénicité, comprenant :
un dispositif d'imagerie par ultrasons destiné à recevoir une image par ultrason, et l'image par ultrason comprend une pluralité de points de pixel, chaque point de pixel a une valeur d'échelle de gris ;
une unité d'analyse d'une région d'intérêt, RDI, connectée au dispositif d'imagerie par ultrasons pour choisir une RDI dans l'image par ultrason ; compter les valeurs d'échelle de gris des points de pixel dans la RDI pour obtenir une valeur moyenne des valeurs d'échelle de gris des points de pixel dans la RDI et un écart-type des valeurs d'échelle de gris des points de pixel dans la RDI ; exclure les points de pixel dans la RDI avec les valeurs d'échelle de gris plus petites que la somme de la valeur d'échelle de gris minimale dans l'image d'échelle de gris et du produit d'un premier facteur d'échelle et de l'écart-type des valeurs d'échelle de gris des points de pixel dans la RDI ; exclure les points de pixel dans la RDI avec les valeurs d'échelle de gris plus grandes que la somme de la valeur moyenne des valeurs d'échelle de gris des points de pixel dans la RDI et du produit d'un deuxième facteur d'échelle et de l'écart-type des valeurs d'échelle de gris des points de pixel dans la RDI ; et moyenner les valeurs d'échelle de gris des points de pixel restants dans la RDI pour obtenir une valeur d'intérêt moyenne ;
une unité d'analyse d'une région de référence connectée au dispositif d'imagerie par ultrasons pour choisir une région de référence qui est non chevauchée par la RDI dans l'image ultrasonore ; et moyenner les valeurs d'échelle de gris des points de pixel restants dans la région de référence pour obtenir une valeur de référence moyenne ; et
une unité de calcul se connecte à l'unité d'analyse de la RDI et l'unité d'analyse de la région de référence pour calculer la différence entre la valeur d'intérêt moyenne et la valeur de référence moyenne pour obtenir un indice d'échogénicité.

9. Système de quantification d'échogénicité selon la revendication 8, dans lequel le premier facteur d'échelle est une valeur dans une plage de 0 à 0,5, et le deuxième facteur d'échelle est une valeur dans une plage de 2 à 5.

10. Système de quantification d'échogénicité selon la revendication 8, l'unité d'analyse de la région de référence en outre :
comptant les valeurs d'échelle de gris des points de pixel dans la région de référence pour obtenir une valeur moyenne des valeurs d'échelle de gris des points de pixel dans la région de référence et un écart-type des valeurs d'échelle de gris des points de pixel dans la région de référence ; et
excluant les points de pixel dans la région de référence avec les valeurs d'échelle de gris plus petites que la somme de la valeur d'échelle de gris minimale dans l'image d'échelle de gris et d'un produit d'un troisième facteur d'échelle et de l'écart-type des valeurs d'échelle de gris des points de pixel dans la région de référence.

11. Système de quantification d'échogénicité selon la revendication 10, l'unité d'analyse de la région de référence en outre :
excluant les points de pixel dans la région de référence avec les valeurs d'échelle de gris plus grandes que la somme de la valeur moyenne des valeurs d'échelle de gris des points de pixel dans la région de référence et du produit d'un quatrième facteur d'échelle et de l'écart-type des valeurs d'échelle de gris des points de pixel dans la région de référence.

12. Système de quantification d'échogénicité selon la revendication 11, dans lequel le troisième facteur d'échelle est une valeur dans une plage de 0 à 0,5, et le quatrième facteur d'échelle est une valeur dans une plage de 0 à 5.

13. Système de quantification d'échogénicité selon la revendication 8, dans lequel la région de référence est située dans une zone d'image qui est au-dessus du centroïde de la RDI et en dehors de la RDI.

14. Système de quantification d'échogénicité selon la revendication 8, le dispositif d'imagerie par ultrasons de plus :
étalonnant les valeurs d'échelle de gris dans l'image ultrasonore par une fonction de transformée.

15. Procédé de quantification selon la revendication 7, dans lequel la fonction de transformée est dérivée :
De la formation d'une image fantôme avec une pluralité de zones d'intensité d'écho de façon répétée par un dispositif d'imagerie par ultrasons pour obtenir une pluralité de premières images fantôme ayant une pluralité de points de pixel à corriger, dans lequel chaque point de pixel à corriger a une valeur d'échelle de gris ;
du comptage des valeurs d'échelle de gris des points de pixel à corriger correspondant à l'une des zones d'intensité d'écho dans chaque première image fantôme pour obtenir une moyenne à corriger de la zone d'intensité d'écho ;
de la répétition de l'étape susmentionnée pour obtenir une pluralité de moyennes à corriger correspondant à différentes zones d'intensité d'écho ; et
de l'obtention d'une pluralité de moyennes de ligne de base par le biais d'un dispositif d'imagerie par ultrasons de ligne de base, de la comparaison de la moyenne à corriger et de la moyenne de ligne de base des mêmes zones d'intensité d'écho et de la dérivation d'une fonction de transformée des moyennes à corriger et des moyennes de ligne de base de différentes zones d'intensité d'écho en ajoutant une plage d'échelle de gris minimale et une plage d'échelle de gris maximale pour dériver une ligne de tendance.

16. Procédé de quantification selon la revendication 15, dans lequel les moyennes de ligne de base sont obtenues par :
La formation d'image fantôme avec une pluralité de zones d'intensité d'écho de façon répétée par le dispositif d'imagerie par ultrasons de ligne de base pour obtenir une pluralité de secondes images fantôme ayant une pluralité de points de pixel de ligne de base, dans lequel chaque point de pixel de ligne de base a une valeur d'échelle de gris ;
le comptage des valeurs d'échelle de gris des points de pixel de ligne de base correspondant à l'une des zones d'intensité d'écho dans chaque seconde image fantôme pour obtenir la moyenne de ligne de base de la zone d'intensité d'écho ; et la répétition de l'étape susmentionnée correspondant à différentes zones d'intensité d'écho.
